# EUROPEAN PATENT SPECIFICATION

(11) **EP 2 649 665 B1**
(45) Date of publication and mention of the grant of the patent: **03.12.2014**
(21) Application number: 11782177.7
(22) Date of filing: 24.10.2011
(51) Int. Cl.: H01M 8/24

(54) **METHOD TO GUIDE GAS STREAMS IN A FUEL CELL SYSTEM AND ARRANGEMENT TO IMPLEMENT SAID METHOD**
VERFAHREN UND VORRICHTUNG ZUR LEITUNG VON GASSTRÖMEN IN EINEM BRENNSTOFFZELLENSYSTEM
PROCÉDÉ ET DISPOSITIF POUR CONDUIRE DES FLUX GAZEUX DANS UN SYSTÈME DE PILE À COMBUSTIBLE

(30) Priority: 08.12.2010 FI 20100415
(43) Date of publication of application: 16.10.2013
(73) Proprietor: Convion Oy, 02150 Espoo (FI)
(72) Inventor: JANSSON, Peik, FI-02180 Espoo (FI); BUDDAS, Sebastian, FI-00180 Helsinki (FI)
(74) Representative: LEITZINGER OY
(86) International application number: PCT/FI2011/050927
(87) International publication number: WO 2012/076746

(56) References cited:
- WO-A2-2006/027421
- WO-A2-2006/075790
- US-A1- 2008 038 622

## Description

### Object of the invention

An object of the present invention is method to guide gas streams in a fuel cell system, said fuel cell system including at least one fuel cell unit comprising fuel cell stacks, whose fuel cells include an anode side and a cathode side, and a recuperator unit for preheating a supply flow of the cathode side, said central duct housing at least a supply and exhaust line of the anode side of the fuel cells. Another object of the invention is an arrangement for guiding gas streams for implementing said method.

### Prior art

The invention relates specifically to SOFC type fuel cell systems (solid oxide fuel cell), in which the generally employed essential material component is nickel. Fuel cell stacks set several demanding requirements on their operation environment. Stacks must be contained in a way that does not compromise the safe operation of the fuel cell system. The general aim of achieving high thermal efficiencies benefits from a high integration level and a compact design of stack components.

As it comes to safety related issues, a major problem is the high flammability of hydrogen or some other combustible gas component used as a reducing component. First, special supervision is required for temperatures and for temperature differences in various parts of the system. Secondly, hydrogen concentration in various parts of the assembly should not exceed the known values matching an auto-ignition limit - principally a LEL (Lower Explosive Limit), i.e. a lower auto-ignition limit - which constitute an immediate explosion hazard for the gas mixtures. As temperature rises, this threshold concentration becomes gradually even lower. The hydrogen concentration has, thus, quite strict limits imposed thereupon.

Consequently, when the fuel cell is in operation as well as during periods of time when anode side safety gas is used, there is always a risk of accumulation of hydrogen gas in various spaces as well as a risk of exceeding the hydrogen concentration or the safety gas temperature, for example due to leaks and malfunction incidents, resulting in a potential explosion hazard.

The better the hydrogen concentrations are kept under control, the better the control that is provided also for problems and risks by both hydrogen and safety gas. Instant burning of any leaked fuel as well as spooling of all plenums with any fuel concentrations are typical ways to achieve this objective.

On top of the above also requirements concerning layout restrictions and total size of the overall fuel cell system sets increasing pressure on minimising the dimensioning and the total weight of the fuel cell system. This applies especially on fuel cell system embodiments utilized in mobile applications, for instance ships etc.

One solution of type prior art for the kind of problems and objectives as described above is offered for instance by US 6,110,612 A. One of the main objects there as well is to obtain a versatile central duct system for various pipings. There is a structure that provides both a general support for the whole system and an access to a large number of single fuel cell stacks externally mounted thereto. The access is provided by openings leading to passages inside the structure. Also other system components, such as reactant and coolant sources, are connected at the openings.

Another solution of this type is also presented by US 6,692,859 B2. Here a manifold is arranged for receiving a large number of fuel cell stacks. Both an inlet passageway disposed between a manifold inlet port and a fuel cell stack inlet port and an outlet passageway disposed between a fuel cell stack outlet port and a manifold outlet port is provided for every single stream of a fuel cell system therein.

However, clear drawbacks still exist. The general structure of such manifolds becomes complicated both in terms of manufacture and operation. For instance, possible leaks - especially the ones of fuel - are difficult to control. Issues around operational safety arise once again. In addition, the everlasting need for extra spooling still impairs the total efficiency of the system. And further, the kind of solution of prior art are in practice suitable for connections between the kind of manifold structure and a one single fuel cell stack at a time only.

### Objective and solution of the invention

An objective of the invention is to provide a solution by which the above-mentioned prior art problems and shortages could be alleviated or completely eliminated and by which the presented goals would be achieved in an effective and economical manner. In order to achieve this objective, a method according to the presently specified invention is characterized by what is set forth in the characterizing clause of claim 1. In addition, a few preferred embodiments of the invention are presented in the dependent claims. On the other hand, the characterizing features of an arrangement in a fuel cell system implementing the method of the invention are set forth in the characterizing clause of claim 6. A few preferred embodiments of such an arrangement are further presented in the dependent claims.

The invention now provides a versatile solution for the problem explained above. According to the invention, an arrangement is proposed where the exhaust gases from the anode side, i.e. mainly fuel, are arranged to be guided inside an exhaust line of the cathode side, which channels the cathode side exhaust gases all the way towards the hot side of an air recuperator.

According a preferable embodiment of the invention, the exhaust line of the cathode side is actually formed by the central duct itself. That is to say, no separate structure is needed to for the exhaust line of the cathode side as the exit flows from the cathode side of the fuel cells is guided by using the central duct.

Preferably all the other main process flows of the fuel cell stacks are arranged to be guided within the space determined by this dominant flow channel redolent of an elongated plenum. The pipings of both the supply stream of cathode side and the supply stream as well as the exhaust streams of anode side are located for at least most of their length inside this central duct. It is of course possible to arrange part of the exit flows to be guided also elsewhere for any specific reason. However, at least an essential part of the piping for anode side exit flows takes place inside the central duct.

Compact overall structure is provided thereby together with improved spooling function. The cathode inlet pipes and anode inlet and outlet pipes are preferably placed inside the central duct such that the off gases from the cathode side effectively spool both the stack surroundings and spaces that anode side piping runs through. At the same time the oxygen in the cathode side outlet stream burn off any possible hydrogen leakages that might occur. The duct provides further a safe environment for fuel connectors as well. All possible leakages will instantly be burned off.

On top of that, the central duct can also be arranged to serve as one of the main supporting structure of the whole fuel cell system. Especially the fuel stacks can now be supported solely by this duct arrangement, thus enabling a cost effective design of the fuel cell system both in terms of assembly and maintenance. Utilizing the kind of a compact fuel and air manifolding arrangement together with an integrated air heat exchanger features an effective and simple way of achieving the target set for the invention.

### Advantages provided by the invention

The invention offers several benefits and improvements in comparison to prior art type solution both in terms of safety, thermal efficiency and general layout. Primary objective of achieving a compact and safe structure of the fuel cell stack is now provided with effective but most simple means. The main benefits gained by the invention are based among others on the following facts.

The pressure difference between various streams as well as between streams and their environment develops now essentially smaller as the high pressure supply streams are located inside slightly less pressurized outlet stream of cathode side, i.e the central duct. However, once the pressure in the middle channel, in other words the central duct, can be arranged onto a suitable level beyond the normal atmospheric pressure in the environment, the pressure difference between the pipings and their immediate environment becomes essentially smaller. In this way, any risks for fuel leakages in the system are minimized.

Another advantage by lowered pressure differences is realized in smaller need for dimensioning as the strength conditions are eased. It is most preferable to arrange the pressure level of all the streams guided through the central duct to be more or less higher than in the central duct such that any leakage occurring in this volume is directed to this volume filled by cathode side exhaust gas. An instant spooling as well possible oxidation of leaked gases is thus ensured in most secure manner.

At the same time as the duct means also serves as the structural support both for the attached fuel cell stack enclosures and generally as a major supporting structure for the whole fuel cell system, whereby the use of a number of priort structure for supporting activities can be excluded from the system. The duct can also be fixed and integrated with the rest supporting structures of a fuel cell system, and thereby also abolishing the need for the above mentioned prior art supporting means. In overall, a smaller general size is also achieved.

Furthermore, according to a very favourable embodiment of the invention, the duct can be dimensioned to match the recuperator at one end of the duct, thus enhancing an even gas flow between the recuperator and the duct. Recuperator works here as an interface between hot and cold space within a temperature difference between levels from +50°C up to +750°C. At the same time the duct also constitutes a supporting structure for the recuperator. The need for other means for the support of the recuperator is effectively eliminated.

Further advantages produced by the invention become evident together the following advantageous embodiments.

### List of figures

The invention will now be described in more detail with reference to the accompanying drawing, in which:
- Figure 1: shows a general end view of an engine including a metal bellow between cylinder head and exhaust pipe,
- Figure 2: shows a partial longitudinal section of a metal bellows according to the present invention,
- Figure 3: shows in a close-up a longitudinal partial section of a metal bellows according to the present invention.

### Detailed description of the invention

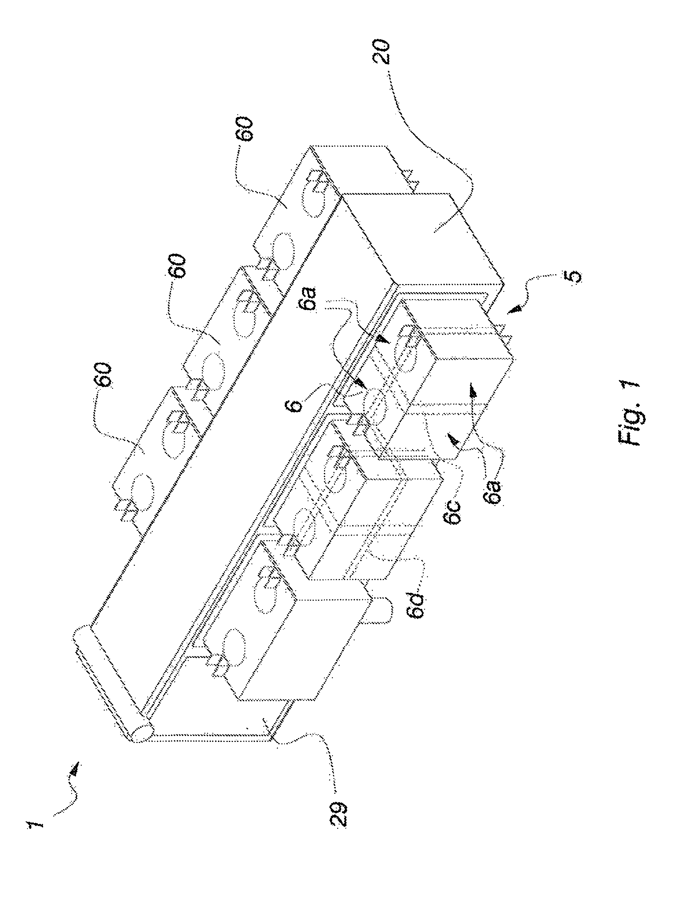

Fig. 1 shows a fuel cell system 1 in a highly schematic view. A fuel cell unit 5, included therein, comprises one or more fuel cell stacks 6, consisting of successively series-connected fuel cells (not shown) featuring an anode side and a cathode side (not shown).

In this application, the anode side refers generally both to anode electrodes included in the fuel cells of the fuel cell units 5 and, from the perspective of fuel, to components for conducting the fuel within the confines of the fuel cell units 5 to the anodes of actual individual fuel cells and to components for further conducting the gases away from the anodes. Respectively, the cathode side refers to cathodes, as well as to components provided for conducting air to and from the cathodes within the confines of the fuel cell units 5.

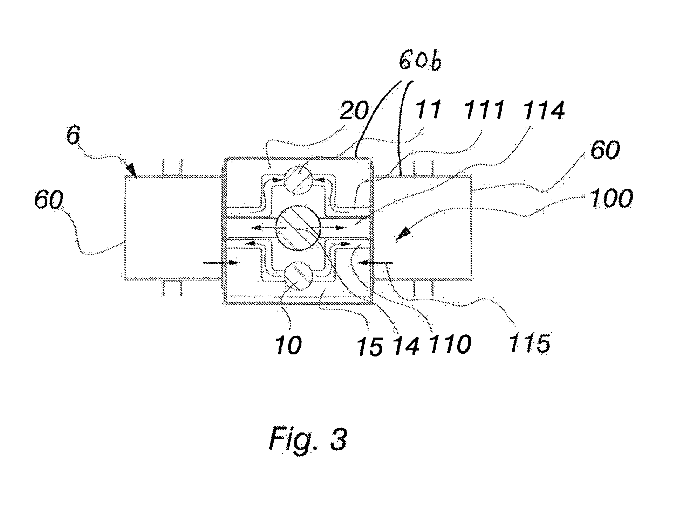

On the cathode side air is supplied through supply line 14 (Fig. 3) and then divided to be delivered to fuel cell stack enclosures 60 and further to fuel cell stacks 6 and individual fuel cells (not shown). Correspondingly, the air coming from the fuel cells composing thereby an exit flow 15 (Fig. 3) further exits the fuel stack compartment and is guided thereafter to flow via a recuperator unit 29 to heat up the supply air flow 14 (Fig. 3) to the cathode side.

In addition, an advantageous embodiment of the invention is presented in figure 1. According to the invention, there is now arranged an exhaust line 15 (Fig. 3) of the cathode side which has been adapted to surround the exhaust line 11 of the anode side. This becomes more apparent in figure 3 presenting a section of a central duct arrangement. The exhaust line 11 flows, thus, inside the exhaust line 15, which in turn is constituted by the central duct 20 itself.

The central duct 20 carries the exhaust gases from the cathode side in stream 15, i.e. mainly air, to the hot side of the air recuperator 29. In addition, preferably all the other main process flows of the fuel cells are arranged take place as well within this space determined by this plenum 20. Specifically the cathode inlet pipes 14 and anode inlet pipes 10 and outlet pipes 11 are preferably placed inside the central duct 20. A compact structure is provided together with an improved and most fail-safe spooling function.

All leakages from any piping inside the central duct 20 are immediately spooled by the exhaust air. In addition, in case any fuel leakage would occur, fuel is oxidized and gained heat energy is utilized in the recuperator. The duct 20 also provides a safe environment for fuel connectors, where possible leakages will instantly be burned off as well. Utilizing the kind of a compact fuel and air manifolding arrangement integrated with an air heat exchanger provides an effective and simple to achieve a safe method to arrange the piping.

Another benefit is constituted by the fact that the pressure difference between streams and their environment becomes essentially smaller than previously. It is now easy to follow a preferable main principle of arranging process lines with higher pressure to locate inside a plenum with a lower pressure. In practice, the supply streams with highest pressures of all process lines are located inside central duct 20, i.e. outlet stream 15 of cathode side. Here the pressure can be dimensioned to be to desirable extent higher than the one of the surrounding atmospheric environment. In this way, the pressure difference between the piping and the environment ends up smaller than otherwise. Thanks to reduced pressure differences, risks for fuel leakages in the system are minimized. The reduction in pressure differences also provides an opportunity to savings in dimensioning.

At the same time as the duct 20 means also serves as the structural support both for the attached fuel cell stack enclosures 60 and generally as a major supporting structure for the whole fuel cell system. Consequently, a number of prior art elements or means for supporting activities can be excluded from the system. The central duct can also be fixed and integrated with the rest supporting structures of a fuel cell system, and thereby also abolishing the need for the above mentioned prior art supporting means. At the same time, a smaller general size is achieved as well.

### A few other embodiments of the invention

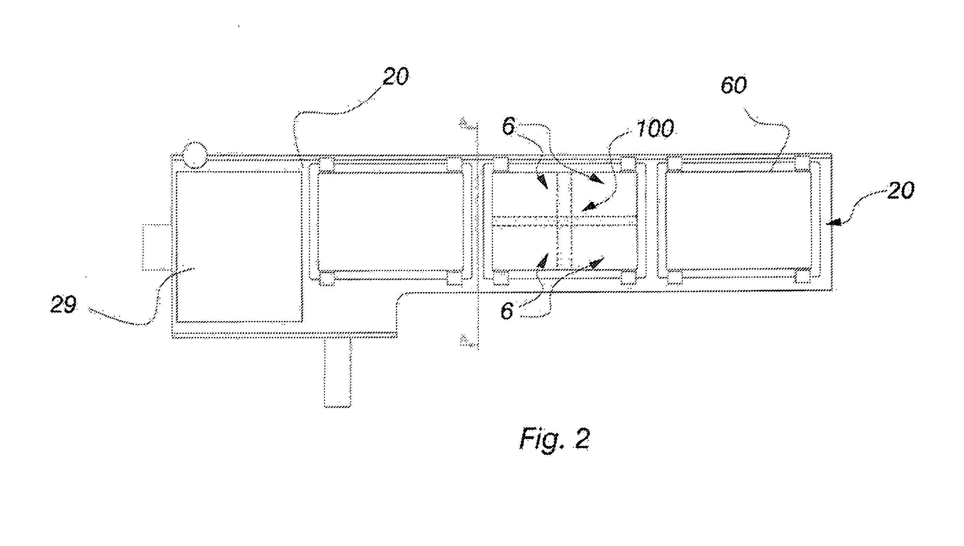

According to one of the most preferable embodiments of the invention, the central duct 20, which forms now the piping for the exhaust flow 15 from the cathode side, can also be dimensioned to match the recuperator 29 at one end of the duct. This comes more apparent especially in figure 2 presenting a schematic side view of a fuel cell system.

Recuperator 29 works here as an interface between hot and cold space within a temperature difference between levels from +50°C up to +750°C. Previously the recuperator has been forced to locate disjointed from the fuel cell arrangements. Large amount of extra space has been required for this purpose.

Now instead, the recuperator 29 can easily be integrated with the central duct structure. According to a further embodiment of the present invention, the central duct 20 also be used as a supporting structure for the recuperator. At the same time as the duct also constitutes now a supporting structure for the recuperator, the need for other means for the support of the recuperator can be effectively eliminated and an essential reduction in need of extra space for the recuperator is gained. According to a further embodiment of the invention, it is even conceivable to arrange the recuperator itself as a part of this supporting structure.

Also by dimensioning the duct 20 and recuperator 29 to match to each other, a more fluent continuance is accomplished for the participating streams within the recuperator 29. The gas flows can be optimized more effectively resulting in an enhanced laminar behaviour of the gas flows between the recuperator and the duct. Electric heaters for startup operation can as well be integrated into the central duct to boost warming of the system.

The proposed central duct arrangement can easily be scaled for any number of stack enclosures 60 in order to vary the power output of the fuel cell system. On the top of that, the same kind of degree of freedom applies well for the fuel cell stack enclosures themselves as well. That is to say, the number of fuel cell stacks 6a within a single fuel cell stack enclosure 60 is not limited in any ways. It can be chosen freely for instance on the basis of layout restrictions or of the requirements on power output.

For instance, in case of restricted available space limitations may apply on the number of either stack enclosures or the number of fuel cell stacks within single enclosures respectively. If the available space is long but narrow, the number of enclosures 60 is increased and the number of individual stacks within enclosures is restricted. In opposite case the number of stacks is increased within enclosures to obtain both shorter and wider dimensions for the whole system.

For example in the embodiment of the invention presented in figure 1 there is four fuel cell stacks 6a arranged to one enclosure 60 at a time, as shown with dash line 6c. Correspondingly, an arrangement with eight stacks in another enclosure next to left is illustrated with an additional dash line 6d. Stacks are arranged here on two overlapping layers.

The possibility to freely increase the number of fuel cell stacks within a single stack enclosures is specifically gained by yet another embodiment of the present invention. The use of the central duct structure as disclosed by the present invention is namely not limited to the main central duct 20 structure only. According to a further preferable embodiment on the present invention, the same principle can also be utilized for a corresponding duct structure in a single fuel cell stack enclosure 60 as well.

This kind of an additional embodiment of the central duct arrangement comes more apparent both in figure 2 as outlined in most schematic way with dash line 6c and in figure 3 showing a cross section of a central duct 20. For the sake of clarity, the additional central duct arrangement is furnished in figure 2 and 3 with reference number 100. It should be emphasized, however, that an analogy between the design of central duct 20 in the main duct system and of duct 100 within a single stack enclosure is by no means a necessity.

The duct arrangement 100 in a individual fuel cell stack enclosure extends from the interface of the main central duct 20 individual fuel cell stacks 6, and between the stacks, towards the opposite end of the enclosure plenum. In this respect the duct 100 is analogous to the main central duct 20, which extends between stack enclosures all the way until the opposite end of the whole arrangement of fuel cell stack enclosures.

The corresponding process streams for inlet and outlet of anode side and inlet and outlet of cathode side in the stack enclosures are furnished in figure 3 with reference numbers 110, 111, 114 and 115 respectively. Inside the stack enclosure 60 the anode intake 110, the anode exhaust 111, and the cathode intake 114 are connected to the individual fuel cell stacks by a required manifold arrangement, the geometry of which depends on the number of the stacks. These connections are essentially gas tight, although leaking of the gas is always possible.

Characteristic to this additional arrangement is that the cathode exhaust channel 115 is formed by the plenum 60b that surrounds the stacks and the gas passages 110, 111, and 114. This means, that the fuel cell cathode side air is exhausted from the stacks into the surrounding plenum 60b to circulate there freely around the stacks and stack connections, before exiting the plenum. Thereby any leakages from the anode side connections are spooled, in a similar manner as it happens in the central duct 20. The exhaust passage 115 of cathode side is, thus, actually comprised by the plenum of the stack enclosure 60 itself, so to speak.

In a preferable embodiment of the invention, in the connecting interface between the central duct 20 and the stack enclosure 60, the wall between them is to a large extent open. Thus it forms a very non-resistant flow passage for the cathode side exhaust gas to flow from the stack enclosure plenum into the central duct. This flow is illustrated by the arrow 115 in figure 3.

The exhaust gas of cathode side is further arranged to discharge then directly through suitable openings into the main exhaust line 15, i.e. the central duct 20. As the exhaust flow of cathode side takes places in the whole plenum 60b of the enclosure 60, inlet and outlet lines 110, 111 from the anode side are surrounded by the exhaust gas stream 115 of the cathode side. By using this kind of embodiment of the central duct arrangement within stack enclosures 60, any leaks from the anode side are effectively spooled by the cathode side exhaust stream and drained from the plenum of the enclosure into the central duct 20.

The plenum 60b takes care of the spooling and further discharging into the central duct 20. This does not mean, however, that a separate duct couldn't be arranged inside the stack enclosure 60 to compose the exhaust passage 115 of the cathode side. Neither does it mean that the other streams 110,111,114 could not be guided outside the exhaust passage 115. That is to say, the supply and outlet streams 110, 111 of anode side can, of course, be led within a separate manifold 100, which surrounds these supply and outlet streams. Possible leaks are spooled and then further discharged into the central duct 20. The manifold 100 can also be arranged such that it collects cathode side exhaust gas streams from individual single stack compartments and guides the total exhaust flow further to the central duct 20.

In any event, the supply streams 110, 114 are led further to actual manifold plates (not shown) of individual fuel cell stacks 6a and eventually to individual fuel cells. Connection can be arranged from lines 110, 114 as well as back to line 111 for every individual fuel cell stack separately. Possible fuel leakages from the anode side of the fuel cells are thereby spooled from stacks and further guided together into the central duct 20. Likewise any leakages from the lines 110, 111, 114 arranged inside the above described optional passage comprised by a separate manifold 100 are spooled by the exhaust gas stream and discharged into the main central duct 20.

All in all, this kind of a preferable embodiment of the invention with an additional central duct arrangement within individual stack enclosures makes it most straightforward to increase the number of individual fuel cell stacks 6a in the stack enclosures. Such a modular type of stack enclosure arrangement provides most flexible system, which can easily be modified both in terms of layout, total number of fuel cell stacks within both an individual enclosure and whole fuel cell system, output power etc.

## Claims

1. A method to guide gas streams in a fuel cell system (1), said fuel cell system (1) including at least one fuel cell unit (5) comprising fuel cell stacks (6), where fuel cells include an anode side and a cathode side, a recuperator unit (29) for preheating a supply flow (14) of the cathode side, and a central duct (20) housing at least a supply and exhaust line (10, 11) of the anode side of the fuel cells, **characterized in that** inside the central duct (20) the said supply and exhaust line (10, 11) of the anode side are arranged to locate inside an exhaust line (15) of the cathode side before said recuperator unit (29).

2. A method according to claim 1, **characterized in that** the exhaust line (15) of the cathode side is comprised by the said central duct (20).

3. A method according to claim 1 or 2, **characterized in that** the said central duct (20) serves as the structural support for the attached fuel cell stack enclosures (60).

4. A method according to any of claims 1-3, **characterized in that** the central duct (20) is dimensioned to match the recuperator (29) at one end of the central duct (20).

5. A method according to any of claims 1-4, **characterized in that** the supply lines (14) of the cathode side of the fuel cells are arranged to locate inside an exhaust line (15) of the cathode side before said recuperator unit (29).

6. An arrangement for guiding gas streams in a fuel cell system (1), said fuel cell system (1) including at least one fuel cell unit (5) comprising fuel cell stacks (6), where fuel cells include an anode side and a cathode side, a recuperator unit (29) for preheating a supply flow (14) of the cathode side, and a central duct (20) housing at least a supply and exhaust line (10, 11) of the anode side of the fuel cells, **characterized in that** inside the central duct (20) the said supply and exhaust line (10, 11) of the anode side have been arranged to locate inside an exhaust line (15) of the cathode side before said recuperator unit (29).

7. An arrangement according to claim 6, **characterized in that** the exhaust line (15) of the cathode side is comprised by the said central duct (20).

8. An arrangement according to claim 6 or 7, **characterized in that** the said central duct (20) serves as the structural support for the attached fuel cell stack enclosures (60).

9. An arrangement according to any of claims 6-8, **characterized in that** the central duct (20) is dimensioned to match the recuperator (29) at one end of the central duct (20).

10. An arrangement according to any of claims 6-9, **characterized in that** the supply lines (14) of the cathode side of the fuel cells are arranged to locate inside an exhaust line (15) of the cathode side before said recuperator unit (29).

## Patentansprüche

1. Verfahren zum Leiten von Gasströmen in einem Brennstoffzellensystem (1), wobei das Brennstoffzellensystem (1) mindestens eine Brennstoffzelleneinheit (5), die Brennstoffzellenstapel (6) umfasst, wobei Brennstoffzellen eine Anodenseite und eine Kathodenseite aufweisen, eine Rekuperatoreinheit (29) zum Vorwärmen eines Zuflusses (14) auf der Kathodenseite und einen zentralen Kanal (20) umfasst, der mindestens eine Zuleitung und eine Ableitung (10, 11) auf der Anodenseite der Brennstoffzellen beherbergt, **dadurch gekennzeichnet, dass** die Zuleitung und die Ableitung (10, 11) auf der Anodenseite im Inneren des zentralen Kanals (20) so angeordnet sind, dass sie sich im Inneren einer Ableitung (15) auf der Kathodenseite vor der Rekuperatoreinheit (29) befinden.

2. Verfahren nach Anspruch 1, **dadurch gekennzeichnet, dass** die Ableitung (15) auf der Kathodenseite von dem zentralen Kanal (20) umfasst wird.

3. Verfahren nach Anspruch 1 oder 2, **dadurch gekennzeichnet, dass** der zentrale Kanal (20) als der Strukturträger für die angebrachten Brennstoffzellenstapelgehäuse (60) dient.

4. Verfahren nach einem der Ansprüche 1 - 3, **dadurch gekennzeichnet, dass** der zentrale Kanal (20) so bemessen ist, dass er dem Rekuperator (29) an einem Ende des zentralen Kanals (20) entspricht.

5. Verfahren nach einem der Ansprüche 1 - 4, **dadurch gekennzeichnet, dass** die Zuleitungen (14) auf der Kathodenseite der Brennstoffzellen so angeordnet sind, dass sie sich im Inneren einer Ableitung (15) auf der Kathodenseite vor der Rekuperatoreinheit (29) befinden.

6. Anordnung zum Leiten von Gasströmen in einem Brennstoffzellensystem (1), wobei das Brennstoffzellensystem (1) mindestens eine Brennstoffzelleneinheit (5), die Brennstoffzellenstapel (6) umfasst, wobei Brennstoffzellen eine Anodenseite und eine Kathodenseite aufweisen, eine Rekuperatoreinheit (29) zum Vorwärmen eines Zuflusses (14) auf der Kathodenseite und einen zentralen Kanal (20) umfasst, der mindestens eine Zuleitung und eine Ableitung (10, 11) auf der Anodenseite der Brennstoffzellen beherbergt, **dadurch gekennzeichnet, dass** die Zuleitung und die Ableitung (10, 11) auf der Anodenseite im Inneren des zentralen Kanals (20) so angeordnet wurden, dass sie sich im Inneren einer Ableitung (15) auf der Kathodenseite vor der Rekuperatoreinheit (29) befinden.

7. Anordnung nach Anspruch 6, **dadurch gekennzeichnet, dass** die Ableitung (15) auf der Kathodenseite von dem zentralen Kanal (20) umfasst wird.

8. Anordnung nach Anspruch 6 oder 7, **dadurch gekennzeichnet, dass** der zentrale Kanal (20) als der Strukturträger für die angebrachten Brennstoffzellenstapelgehäuse (60) dient.

9. Anordnung nach einem der Ansprüche 6 - 8, **dadurch gekennzeichnet, dass** der zentrale Kanal (20) so bemessen ist, dass er dem Rekuperator (29) an einem Ende des zentralen Kanals (20) entspricht.

10. Anordnung nach einem der Ansprüche 6 - 9, **dadurch gekennzeichnet, dass** die Zuleitungen (14) auf der Kathodenseite der Brennstoffzellen so angeordnet sind, dass sie sich im Inneren einer Ableitung (15) auf der Kathodenseite vor der Rekuperatoreinheit (29) befinden.

## Revendications

1. Procédé pour guider des flux de gaz dans un système de piles à combustible (1), ledit système de piles à combustible (1) comprenant au moins une unité de piles à combustible (5) comprenant des empilements de piles à combustible (6), des piles à combustible comprenant un côté anode et un côté cathode, une unité de récupérateur (29) pour préchauffer un débit d'alimentation (14) du côté cathode, et un conduit central (20) hébergeant au moins une ligne d'alimentation et d'échappement (10, 11) du côté anode des piles à combustible, **caractérisé en ce qu'**à l'intérieur du conduit central (20), lesdites lignes d'alimentation et d'échappement (10, 11) du côté anode sont disposées de manière à se situer à l'intérieur d'une ligne d'échappement (15) du côté cathode avant ladite unité de récupérateur (29).

2. Procédé selon la revendication 1, **caractérisé en ce que** la ligne d'échappement (15) du côté cathode est composée dudit conduit central (20).

3. Procédé selon la revendication 1 ou 2, **caractérisé en ce que** ledit conduit central (20) sert de support structurel pour les enceintes d'empilements de piles à combustible (60) ajoutées.

4. Procédé selon l'une quelconque des revendications 1 - 3, **caractérisé en ce que** le conduit central (20) est dimensionné de façon à correspondre au récupérateur (29) à une extrémité du conduit central (20).

5. Procédé selon l'une quelconque des revendications 1 - 4, **caractérisé en ce que** les lignes d'alimentation (14) du côté cathode des piles à combustible sont disposées de manière à se situer à l'intérieur d'une ligne d'échappement (15) du côté cathode avant ladite unité de récupérateur (29).

6. Agencement pour guider des flux de gaz dans un système de piles à combustible (1), ledit système de piles à combustible (1) comprenant au moins une unité de piles à combustible (5) comprenant des empilements de piles à combustible (6), des piles à combustible comprenant un côté anode et un côté cathode, une unité de récupérateur (29) pour préchauffer un débit d'alimentation (14) du côté cathode, et un conduit central (20) hébergeant au moins une ligne d'alimentation et d'échappement (10, 11) du côté anode des piles à combustible, **caractérisé en ce qu'**à l'intérieur du conduit central (20), lesdites lignes d'alimentation et d'échappement (10, 11) du côté anode ont été disposées de manière à se situer à l'intérieur d'une ligne d'échappement (15) du côté cathode avant ladite unité de récupérateur (29).

7. Agencement selon la revendication 6, **caractérisé en ce que** la ligne d'échappement (15) du côté cathode est composée dudit conduit central (20).

8. Agencement selon la revendication 6 ou 7, **caractérisé en ce que** ledit conduit central (20) sert de support structurel pour les enceintes d'empilements de piles à combustible (60) ajoutées.

9. Agencement selon l'une quelconque des revendications 6 - 8, **caractérisé en ce que** le conduit central (20) est dimensionné de façon à correspondre au récupérateur (29) à une extrémité du conduit central (20).

10. Agencement selon l'une quelconque des revendications 6 - 9, **caractérisé en ce que** les lignes d'alimentation (14) du côté cathode des piles à combustible sont disposées de manière à se situer à l'intérieur d'une ligne d'échappement (15) du côté cathode avant ladite unité de récupérateur (29).
